# EUROPEAN PATENT SPECIFICATION

(11) **EP 2 949 526 B1**
(45) Date of publication and mention of the grant of the patent: **14.09.2016**
(21) Application number: 14195029.5
(22) Date of filing: 26.11.2014
(51) Int. Cl.: B60T 8/36, B60T 17/04, B62K 19/38, B62L 3/00

(54) **Saddle-straddling type motor vehicle**
Grätschsitzkraftfahrzeug
Véhicule à moteur de type selle à enfourcher

(30) Priority: 30.05.2014 JP 2014112933
(43) Date of publication of application: 02.12.2015
(73) Proprietor: Yamaha Hatsudoki Kabushiki Kaisha, Shizuoka-ken 438-8501 (JP)
(72) Inventor: Hashimoto, Naochika, Shizuoka-ken, 438-8501 (JP)
(74) Representative: Zimmermann, Tankred Klaus

(56) References cited:
- EP-A1- 2 284 071
- EP-A1- 2 591 962
- JP-A- H06 321 078
- JP-A- 2011 051 417

## Description

### BACKGROUND OF THE INVENTION

### Field of the Invention

The present invention relates to a saddle-straddling type motor vehicle.

### Description of Related Art

In a saddle-straddling type motor vehicle such as a motorcycle that includes a hydraulic unit for driving a brake device, the hydraulic unit is fixed below a seat, for example. A brake device that brakes a front wheel and a brake device that brakes a rear wheel are connected to the hydraulic unit through brake pipes that are made of metal, rubber or the like, respectively (see JP 2011-51417 A, for example).

### BRIEF SUMMARY OF THE INVENTION

An object of the present invention is to provide a saddle-straddling type motor vehicle in which flexibility in arrangement of components can be increased and a size of a vehicle can be decreased.

This object is achieved by saddle-straddling type motor vehicle according to claim 1.

The present invention is based on the findings that in prior art saddle-straddling type motor vehicles a brake pipe for connecting the hydraulic unit and a front wheel brake device and a brake pipe for connecting the hydraulic unit and a rear wheel brake device are individually fixed to a main frame, a seat frame or the like. In this case, spaces for fixing the brake pipes to the frame are necessary at a plurality of locations. Therefore, flexibility in arrangement of other components is decreased, and a decrease in the size of a vehicle is prevented.
(1) A saddle-straddling type motor vehicles according to the present invention includes a head pipe, a front wheel arranged below the head pipe, a main frame that extends in a vehicle rearward downward direction from the head pipe, a pair of right and left seat frames that extends in a vehicle rearward direction from the main frame, a swing arm arranged below the pair of seat frames and mounted to the main frame to be swingable with a pivot shaft being used as a center, a rear wheel rotatably mounted to the swing arm, a front wheel brake device for braking the front wheel, a rear wheel brake device for braking the rear wheel, a seat supported by the pair of seat frames, a hydraulic unit, for driving the front wheel brake device and the rear wheel brake device, that is provided below the seat and above the swing arm, a front wheel brake pipe for connecting the front wheel brake device to the hydraulic unit and a rear wheel brake pipe for connecting the rear wheel brake device to the hydraulic unit, wherein at least a part of the hydraulic unit is positioned between the pair of seat frames, the pivot shaft is positioned at a position obliquely further forward downward than the hydraulic unit, the front wheel brake pipe includes a first large diameter pipe, a first small diameter pipe that communicates with the first large diameter pipe, and has a diameter smaller than the first large diameter pipe and a first holder, at least the hydraulic unit and the first holder are coupled by the first small diameter pipe, the rear wheel brake pipe includes a second large diameter pipe, a second small diameter pipe that communicates with the second large diameter pipe, and has a diameter smaller than the second large diameter pipe and a second holder, at least the hydraulic unit and the second holder are coupled by the second small diameter pipe, and the first and second holders are fixed to one seat frame by a common fastening member between the hydraulic unit and the pivot shaft when seen in side view to sandwich a part of the one seat frame therebetween.
   In this saddle-straddling type motor vehicle, the hydraulic unit is provided below the seat supported by the pair of seat frames and above the swing arm. At least the part of the hydraulic unit is positioned between the pair of seat frames. The front wheel brake device for braking the front wheel is connected to the hydraulic unit through the front wheel brake pipe, and the rear wheel brake device for braking the rear wheel is connected to the hydraulic unit through the rear wheel brake pipe. The first holder of the front wheel brake pipe and the second holder of the rear wheel brake pipe are fixed to the one seat frame by the common fastening member between the hydraulic unit and the pivot shaft of the swing arm when seen in side view, respectively, to sandwich the part of the one seat frame therebetween.
   In this case, because the front wheel brake pipe and the rear wheel brake pipe are fixed to the seat frame by the common fastening member, it is possible to decrease the number of components and ensure a space for the arrangement of other components as compared to a case in which these are individually fixed to the seat frame. Therefore, flexibility in the arrangement of other components is increased, and the size of the vehicle can be decreased.
   Further, when the rear wheel brake pipe is arranged to extend from the hydraulic unit towards the swing arm, and extend along the swing arm in the rearward direction, fluctuation of position of the rear wheel brake pipe due to the swinging of the swing arm is decreased. In this case, because the pivot shaft is positioned at a position obliquely further forward downward than the hydraulic unit, the rear wheel brake pipe and the front wheel brake pipe are arranged to extend in the common direction from the hydraulic unit. Therefore, the front wheel brake pipe and the rear wheel brake pipe are fixed to the seat frame by the common fastening member between the hydraulic unit and the pivot shaft, whereby it is possible to decrease the number of the components and ensure a space for the arrangement of other components while the rear wheel brake pipe is appropriately arranged such that the fluctuation of position is decreased.
   Further, because the hydraulic unit and the first and second holders are coupled by the first and second small diameter pipes having relatively small diameters, a space occupied by the front wheel brake pipe and the rear wheel brake pipe among the hydraulic unit and the first and second holders is decreased. Therefore, flexibility in arrangement of the front wheel brake pipe and the rear wheel brake pipe is improved. Therefore, even when there is a restriction in arrangement of the front wheel brake pipe and the rear wheel brake pipe due to other components and the like, the first and second holders can be fixed between the hydraulic unit and the pivot shaft as described above.
(2) The first and second large diameter pipes may be made of resin or rubber, respectively, and the first and second small diameter pipes may be made of metal, respectively.
   In this case, because the first and second large diameter pipes have high flexibility, a cost is reduced, and assembly performance is improved.
(3) The first holder and the front wheel brake device may be coupled by the first large diameter pipe, and the second holder and the rear wheel brake device may be coupled by the second large diameter pipe.
   In this case, the first small diameter pipe and the first large diameter pipe can be coupled by the first holder, and the second small diameter pipe and the second large diameter pipe can be coupled by the second holder.
(4) The part of the one seat frame may include a bottom that extends in an inward direction from the one seat frame.
   In this case, because the first and second holders are arranged inside the pair of seat frames, the size of the saddle-straddling type motor vehicle can be decreased. Further, flexibility in choices of the thickness and the material of portions of the seat frame except for the bottom is increased.
(5) The first holder may be arranged on an upper side of the bottom, and the second holder may be arranged on a lower side of the bottom.
   In this case, because the second holder is close to the pivot shaft of the swing arm, it becomes easier to arrange the rear wheel brake pipe close to the pivot shaft.
(6) A first hole may be provided at the first holder, a second hole may be provided at the second holder, a third hole may be provided at the part of the one seat frame, the fastening member may include a bolt and a nut, and the first and second holders may be positioned with respect to the one seat frame such that the first hole, the second hole and the third hole overlap with one another, and the bolt may be inserted into the first hole, the second hole and the third hole and the nut may be attached to one end of the bolt.
   In this case, the first and second holders of the front wheel brake pipe and the rear wheel brake pipe can be fixed to the seat frame with a simple configuration. Further, because the common third hole of the seat frame are used for fixing the first and second holders, the number of holes formed at the seat frame can be decreased. Thus, strength of the seat frame can be ensured.
(7) The first holder may include a first joining member for joining the first small diameter pipe and the first large diameter pipe, and the second holder may include a second joining member for joining the second small diameter pipe and the second large diameter pipe.
   In this case, because the first joining member for joining the first and second small diameter pipes and the second joining member for joining the first and second large diameter pipes are fixed to the seat frame, respectively, the number of components is inhibited, a cost can be decreased and a space can be ensured.
(8) The saddle-straddling type motor vehicle may further include a fuel tank provided in front of the seat, and a suspension member arranged between the fuel tank and the swing arm, wherein the first and second holders may be fixed in a region surrounded by the fuel tank, the swing arm, the suspension member and the one seat frame, respectively.
   In this case, because the front wheel brake pipe and the rear wheel brake pipe can be fixed to the seat frame in a limited space, flexibility in arrangement and design of the fuel tank, the swing arm, the suspension member and the seat frame is increased.
(9) The saddle-straddling type motor vehicle may further include an air cleaner that is provided between the head pipe and the fuel tank and purifies air led to an engine.

In this case, a space appropriate for arrangement of the hydraulic unit is ensured below the seat and above the swing arm.

### BRIEF DESCRIPTION OF THE SEVERAL VIEWS OF THE DRAWINGS

Fig. 1 is a side view showing a motorcycle according to one embodiment of the present invention;
Fig. 2 is a diagram for explaining a relation between a brake and a hydraulic unit;
Fig. 3 is a side view showing the hydraulic unit and its peripheral portions;
Fig. 4 is a diagram showing the hydraulic unit and its peripheral portions as viewed from behind;
Fig. 5 is a diagram showing the hydraulic unit and its peripheral portions as obliquely viewed from the front;
Fig. 6 is a perspective view showing a joining member and its peripheral portions;
Fig. 7 is a schematic top view of the joining member; and
Fig. 8 is a schematic cross sectional view of the joining member.

### DESCRIPTION OF THE PREFERRED EMBODIMENTS

A motorcycle will be described below as one example of a saddle-straddling type motor vehicle according to embodiments of the present invention with reference to drawings.

### (1) Configuration of Motorcycle

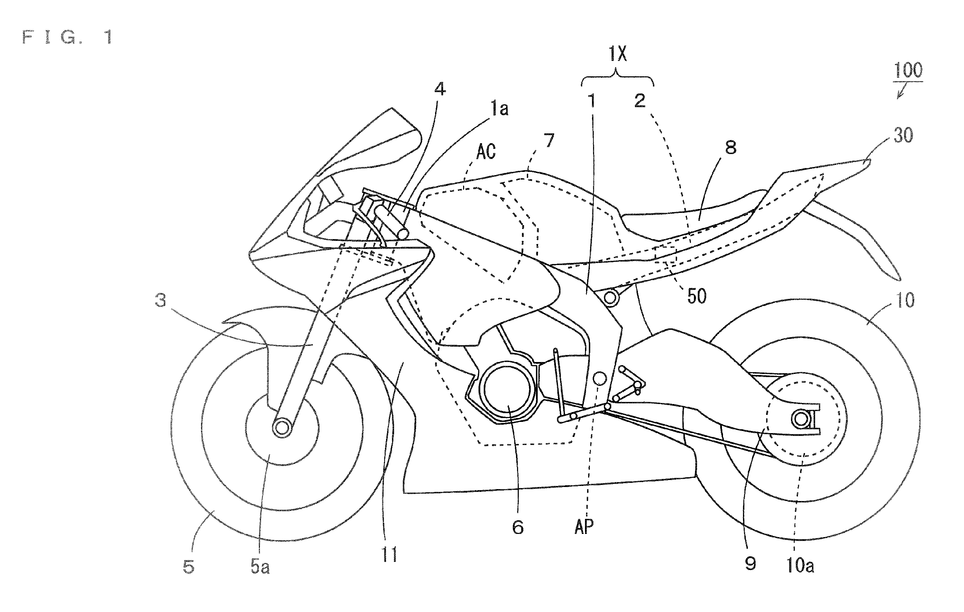

Fig. 1 is a side view showing the motorcycle according to one embodiment of the present invention. In the following description, a forward direction and a rearward direction mean a forward direction (a vehicle forward direction) and a rearward direction (a vehicle rearward direction), respectively, with the motorcycle 100 of Fig. 1 being used as a basis.

As shown in Fig. 1, the motorcycle 100 includes a body frame 1X. The body frame 1X includes a head pipe 1a, a main frame 1 and a seat frame 2. The main frame 1 is provided to extend in a rearward downward direction from the head pipe 1 a. The seat frame 2 is provided to extend in the rearward direction from the main frame 1.

A front fork 3 is mounted to the head pipe 1 a to be swingable in rightward and leftward directions. A handle 4 is provided at the upper end of the front fork 3, and a front wheel 5 is rotatably supported at the lower end of the front fork 3. In the front wheel 5, a brake 5a for braking the front wheel 5 is provided. A body cover 11 is provided to cover a part of each of the main frame 1, the seat frame 2 and the front fork 3.

An engine 6 is provided at a lower portion of the main frame 1. An air cleaner AC is supported above the engine 6 by the main frame 1. The air cleaner AC is connected to the engine 6 via a throttle body (not shown). Air purified by the air cleaner AC is led to the engine 6. A fuel tank 7 is provided behind the air cleaner AC. A seat 8 on which a driver is seated is held behind the fuel tank 7 by the seat frame 2. A hydraulic unit 50 is provided below the seat 8. Details of the hydraulic unit 50 will be described below.

A swing arm 9 is provided behind the engine 6. The swing arm 9 is mounted to the main frame 1 to be swingable with a pivot shaft AP being used as a center. The pivot shaft AP is positioned at a position further downward than the fuel tank 7 and obliquely further forward downward than the hydraulic unit 50. A rear wheel 10 is rotatably supported at the rear end of the swing arm 9. A brake 10a for braking the rear wheel 10 is provided at the rear wheel 10.

### (2) Relation between each Brake and Hydraulic Unit

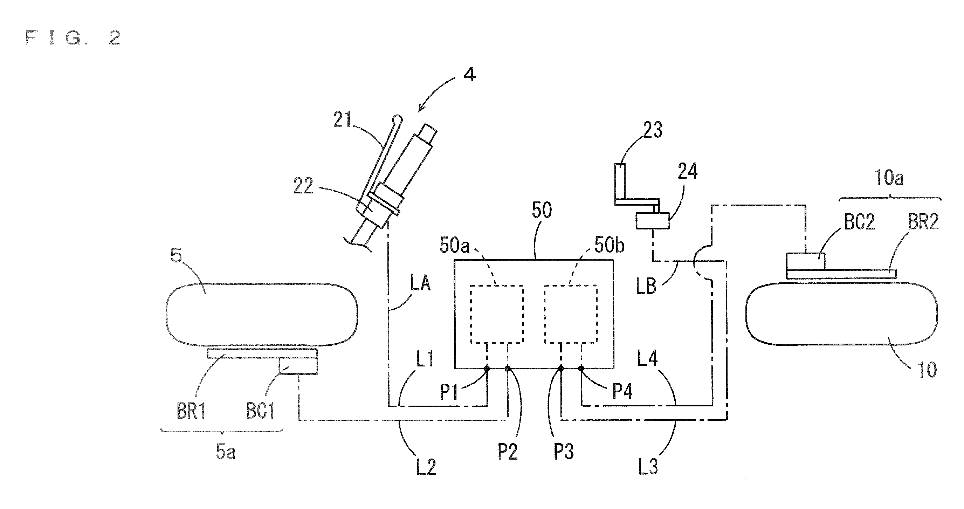

Fig. 2 is a diagram for explaining a relation between each of the brakes 5a, 10a and the hydraulic unit 50. As shown in Fig. 2, the brake 5a includes a brake rotor BR1 and a brake caliper BC1, and the brake 10a includes a brake rotor BR2 and a brake caliper BC2. The brake rotor BR1 is rotated together with the front wheel 5, and the brake rotor BR2 is rotated together with the rear wheel 10.

The brake calipers BC1, BC2 include brake pads, respectively. The brake pad of the brake caliper BC1 is pressed against the brake rotor BR1 by oil pressure, so that the front wheel 5 is braked. Similarly, the brake pad of the brake caliper BC2 is pressed against the brake rotor BR2 by oil pressure, so that the rear wheel 10 is braked.

A brake lever 21 and a master cylinder 22 are provided at a right portion of the handle 4. Further, a brake pedal 23 and a master cylinder 24 are provided at a lower portion on the right side of the seat 8 (Fig. 1).

The hydraulic unit 50 includes front wheel ports P1, P2, rear wheel ports P3, P4 and hydraulic circuits 50a, 50b. In the hydraulic unit 50, the front wheel ports P1, P2 are connected to the hydraulic circuit 50a, respectively, and the rear wheel ports P3, P4 are connected to the hydraulic circuit 50b, respectively.

The master cylinder 22 is connected to the front wheel port P1 of the hydraulic unit 50 through a brake pipe L1. The brake caliper BC1 is connected to the front wheel port P2 of the hydraulic unit 50 through a brake pipe L2. The master cylinder 24 is connected to the rear wheel port P3 of the hydraulic unit 50 through a brake pipe L3. The brake caliper BC2 is connected to the rear wheel port P4 of the hydraulic unit 50 through a brake pipe L4. The brake calipers BC1, BC2, the master cylinders 22, 24 and the brake pipes L1 to L4 are filled with brake oil used as a brake liquid, respectively.

When the brake lever 21 is operated by the driver, oil pressure is supplied from the master cylinder 22 to the brake caliper BC1 through the hydraulic circuit 50a. Thus, braking force is exerted on the front wheel 5. Further, when the brake pedal 23 is operated by the driver, oil pressure is supplied from the master cylinder 24 to the brake caliper BC2 through the hydraulic circuit 50b. Thus, the braking force is exerted on the rear wheel 10.

The hydraulic circuit 50a adjusts the oil pressure in the brake caliper BC1. Thus, the braking force exerted on the front wheel 5 is adjusted. The hydraulic circuit 50b adjusts the oil pressure in the brake caliper BC2. Thus, the braking force exerted on the rear wheel 10 is adjusted.

### (3) Fixing of Brake Pipes

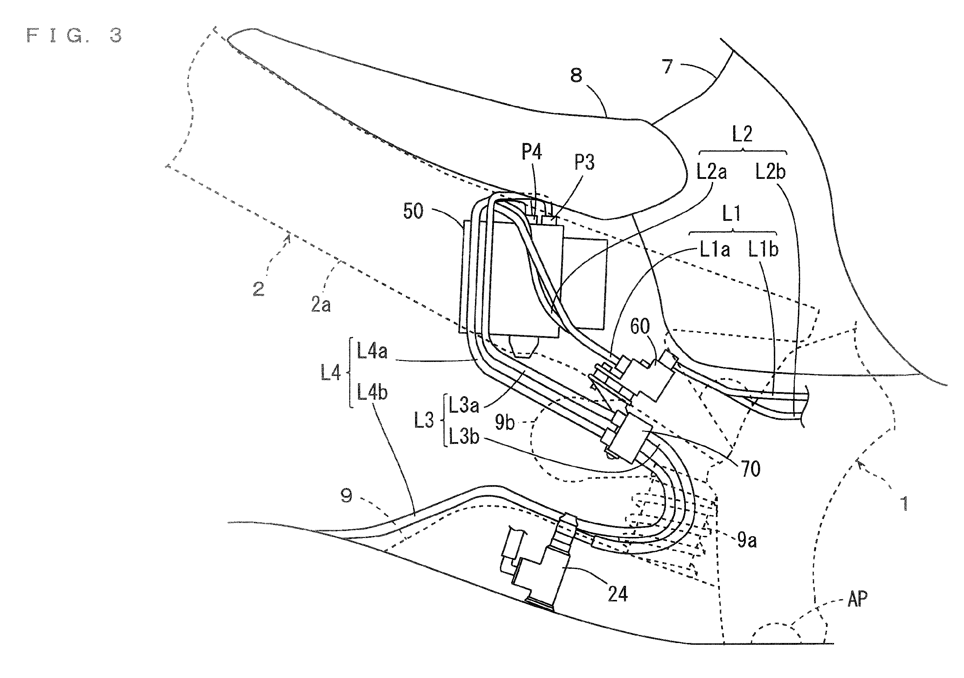

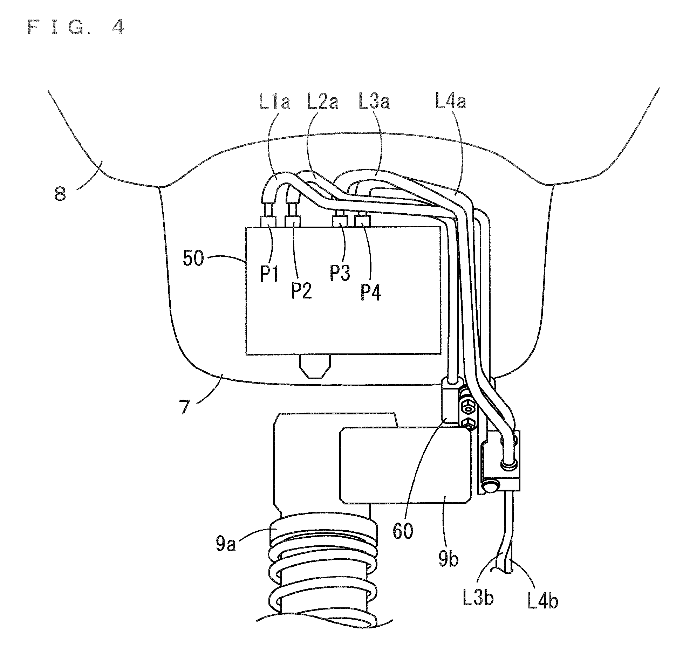

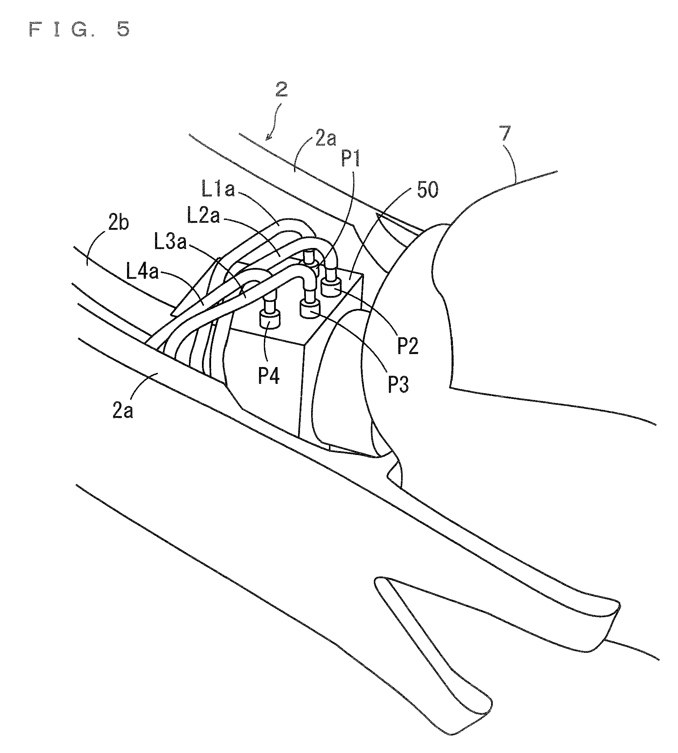

Fig. 3 is a side view showing the hydraulic unit 50 and its peripheral portions. Fig. 4 is a diagram showing the hydraulic unit 50 and its peripheral portions as viewed from behind. Fig. 5 is a diagram showing the hydraulic unit 50 and its peripheral portions as obliquely viewed from the front. The seat frame 2 is not shown in Fig. 4, and the seat 8 is not shown in Fig. 5.

As shown in Fig. 3, the hydraulic unit 50 is arranged behind the fuel tank 7 and below the seat 8. As shown in Fig. 5, the seat frame 2 has a pair of right and left frame members 2a. The pair of frame members 2a is provided to extend in a front-and-rear direction and be spaced apart from each other. At least a part of the hydraulic unit 50 is positioned between the pair of frame members 2a. In this manner, the hydraulic unit 50 is arranged below the seat 8 and inside the seat frame 2, whereby maintenance of the hydraulic unit 50 can be easily performed with the seat 8 being demounted (the state of Fig. 5).

The motorcycle 100 of the present example is a sports-type, and the air cleaner AC (Fig. 1) is provided between the head pipe 1 a (Fig. 1) and the fuel tank 7 as described above. Therefore, a position at which the hydraulic unit 50 can be arranged is restricted. Specifically, the hydraulic unit 50 can be arranged only below the seat 8. In this case, the pivot shaft AP of Fig. 3 of the swing arm 9 is positioned at a position obliquely further forward downward than the hydraulic unit 50. That is, the pivot shaft AP is positioned in front of the hydraulic unit 50 when seen in plan view.

As shown in Fig. 3, the brake pipe L1 includes an inflexible pipe L1a and a flexible pipe L1b, and the brake pipe L2 includes an inflexible pipe L2a and a flexible pipe L2b. The inflexible pipes L1a, L2a are connected to the flexible pipes L1b, L2b via a joining member 60, respectively. The brake pipe L3 includes an inflexible pipe L3a and a flexible pipe L3b, and the brake pipe L4 includes an inflexible pipe L4a and a flexible pipe L4b. The inflexible pipes L3a, L4a are connected to the flexible pipes L3b, L4b via a joining member 70, respectively. The joining members 60, 70 are arranged at positions obliquely further forward downward than the hydraulic unit 50 when seen in side view.

A diameter of each of the inflexible pipes L1a, L2a, L3a, L4a is smaller than a diameter of each of the flexible pipes L1b, L2b, L3b, L4b. The inflexible pipes L1a, L2a, L3a, L4a preferably have higher rigidity than the flexible pipes L1b, L2b, L3b, L4b. On the other hand, the flexible pipes L1b, L2b, L3b, L4b preferably have higher flexibility than the inflexible pipes L1a, L2a, L3a, L4a. In the present example, the inflexible pipes L1a, L2a, L3a, L4a are made of metal such as iron, respectively, and the flexible pipes L1b, L2b, L3b, L4b are made of resin such as a fluororesin or rubber, respectively. A surface of each of the flexible pipes L1b, L2b, L3b, L4b may be covered with a mesh made of metal (a stainless mesh).

As shown in Fig. 4, the ports P1, P2, P3, P4 are provided to project from the upper surface of the hydraulic unit 50 in an upward direction. One end of the inflexible pipe L1a is connected to the port P1, and one end of the inflexible pipe L2a is connected to the port P2. Further, one end of the inflexible pipe L3a is connected to the port P3, and one end of the inflexible pipe L4a is connected to the port P4.

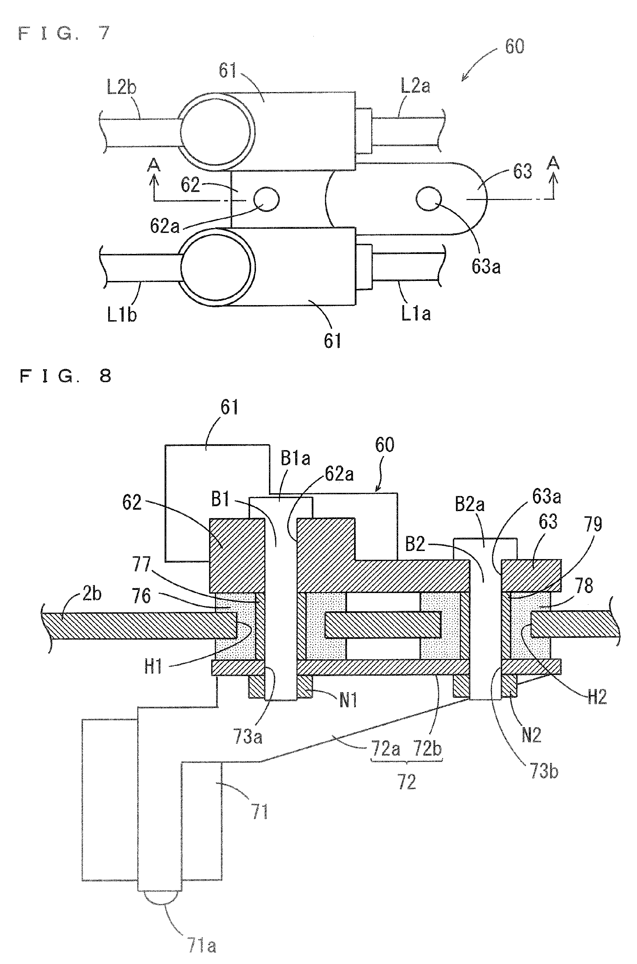

The hydraulic unit 50 has a motor, a pump and the like, and the hydraulic unit 50 vibrates when these are operated. As described below, in the present example, the inflexible pipes L1a, L2a, L3a, L4a connected to the hydraulic unit 50 are mounted to the seat frame 2 with grommets 76, 78 (Fig. 8, described below) that are used as buffer members sandwiched therebetween. Therefore, the inflexible pipes L1a, L2a, L3a, L4a are prevented from being damaged by the vibration of the hydraulic unit 50.

As shown in Fig. 3, the joining members 60, 70 are arranged between the hydraulic unit 50 and the pivot shaft AP of the swing arm 9 when seen in side view. Each of the flexible pipes L1b, L2b extends in the forward direction by passing through a position below the fuel tank 7 from the joining member 60. The flexible pipe L1b is connected to the master cylinder 22 of Fig. 2, and the flexible pipe L2b is connected to the brake caliper BC1 of Fig. 2. The flexible pipes L3b, L4b extend in an obliquely forward downward direction towards the pivot shaft AP of the swing arm 9 from the joining member 60. The master cylinder 24 is provided to be adjacent to the swing arm 9 in the vicinity of the pivot shaft AP. The flexible pipe L3b is connected to the master cylinder 24. The flexible pipe L4b extends in the rearward direction along the upper side of the swing arm 9 from a position in the vicinity of the pivot shaft AP, and is connected to the brake caliper BC2 of Fig. 2. In this case, the flexible pipes L3b, L4b may be positioned with respect to the main frame 1 or the swing arm 9 by fasteners and the like to pass through the vicinity of the pivot shaft AP.

The flexible pipe L4b is arranged to pass through the vicinity of the pivot shaft AP and extend along the swing arm 9, whereby the fluctuation of position of the flexible pipe L4b due to the swinging of the swing arm 9 is decreased. Specifically, a portion of the flexible pipe L4b extending along the swing arm 9 swings together with the swing arm 9. On the other hand, the fluctuation of position due to the swinging of the swing arm 9 is hardly generated at a portion of the flexible pipe L4b extending from the joining member 70 to a position in the vicinity of the pivot shaft AP. In this manner, the fluctuation of position of the flexible pipe L4b is small, so that oil pressure in the brake caliper BC2 of Fig. 2 is stable. Thus, the braking force exerted on the rear wheel 10 is prevented from being unstable.

A suspension 9a that energizes the swing arm 9 is provided between the fuel tank 7 and the swing arm 9. As shown in Fig. 4, a reservoir tank 9b is mounted to the upper end of the suspension 9a. The reservoir tank 9b is arranged to extend in a transverse direction. As shown in Fig. 3, the joining members 60, 70 are fixed to the seat frame 2 in a region surrounded by the fuel tank 7, the suspension 9a, the swing arm 9, the one frame member 2a of the seat frame 2, respectively.

As described above, the brake pipes L1, L2 extend in the forward direction by passing through a position below the fuel tank 7 from the hydraulic unit 50. On the other hand, the brake pipes L.3, L4 extend towards the pivot shaft AP arranged below the fuel tank 7 from the hydraulic unit 50. In this case, the brake pipes L1 to L4 extend in a common direction from one another from the hydraulic unit 50. In the present embodiment, the joining member 60 of the brake pipes L1, L2, and the joining member 70 of the brake pipes L3, L4 are fixed to the seat frame 2 by common fastening members. Thus, it is possible to decrease the number of components for fixing the brake pipes L1 to L4, and ensure a space for arrangement of other components without changing arrangement of the brake pipes L1 to L4.

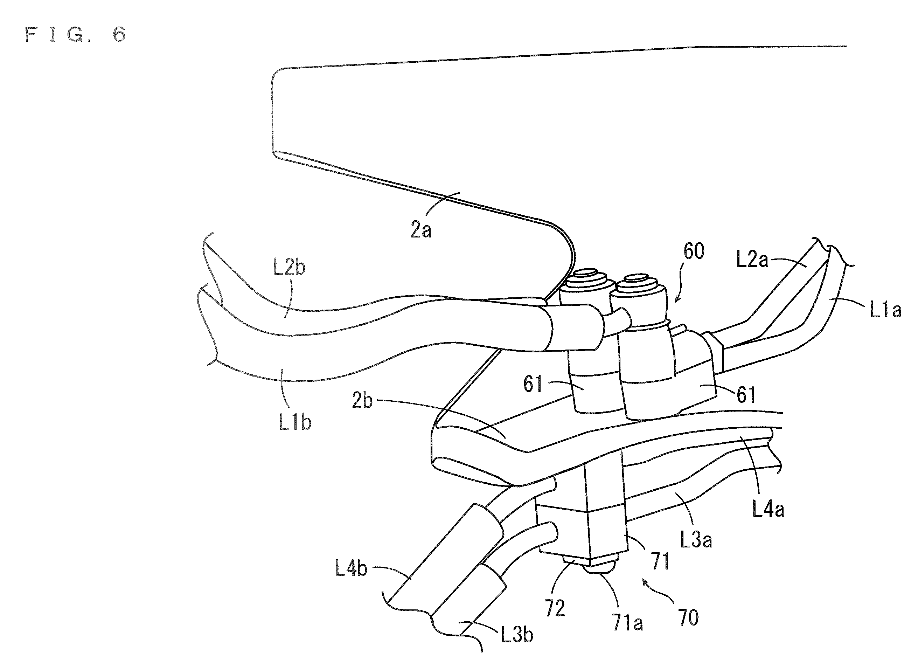

Fig. 6 is a perspective view showing the joining members 60, 70 and their peripheral portions. Fig. 7 is a schematic top view of the joining member 60. Fig. 8 is a schematic cross sectional view of the joining members 60, 70. Fig. 8 shows a cross sectional view taken along the line A-A of Fig. 7. Further, in Fig. 8, the inflexible pipes L1a, L2a, L3a, L4a and the flexible pipes L1b, L2b, L3b, L4b are not shown.

As shown in Fig. 6, a bottom member 2b is provided to extend in an inward direction from the lower end of each frame member 2a of the seat frame 2. The joining member 60 is arranged on the upper surface of the bottom member 2b, and the joining member 70 is arranged on the lower surface of the bottom member 2b at a position in close proximity to the one frame member 2a.

In the present example, the frame members 2a and the bottom member 2b are provided in a plate shape, respectively. The thickness of the bottom member 2b may be smaller than the thickness of each of the frame members 2a. In this case, it becomes easier to fix the joining members 60, 70 to the bottom member 2b. Further, the material of the bottom member 2b may be different from the material of the frame members 2a such that rigidity of the bottom member 2b is higher than rigidity of the frame members 2a. In this case, the bottom member 2b is prevented from being deformed or damaged due to the fixing of the joining members 60, 70.

As shown in Fig. 7, the joining member 60 includes a pair of flow path forming portions 61, a coupling portion 62 and a protruding piece 63. Each flow path forming portion 61 has an L shape (see Fig. 6). A liquid-tight flow path is formed inside each flow path forming portion 61. The inflexible pipe L1a is connected to one end of the one flow path forming portion 61, and the flexible pipe L1b is connected to the other end. Further, the inflexible pipe L2a is connected to one end of the other flow path forming portion 61, and the flexible pipe L2b is connected to the other end.

The pair of flow path forming portions 61 is coupled to each other with the coupling portion 62 sandwiched therebetween. The protruding piece 63 is provided to project in the rearward direction from the bottom of the coupling portion 62. A hole 62a is formed to penetrate the coupling portion 62, and a hole 63a is formed to penetrate the protruding piece 63.

As shown in Fig. 6, the joining member 70 includes a joining portion 71 and a fixing portion 72. The joining portion 71 has a rectangular parallelepiped shape. A pair of fluid-tight flow paths is formed inside the joining portion 71. The inflexible pipes L3a, L4a are connected to one side surface of the joining portion 71, and the flexible pipes L3b, L4b are connected to the other side surface parallel to the one side surface. In this case, the inflexible pipe L3a and the flexible pipe L3b communicate with each other through the one flow path in the joining portion 71, and the inflexible pipe L4a and the flexible pipe L4b communicate with each other through the other flow path in the joining portion 71.

As shown in Fig. 8, the fixing portion 72 includes a bent portion 72a and a fixing plate 72b. The bent portion 72a is bent to overlap with the lower surface and a side surface of the joining portion 71 and extends in the upward direction. The fixing plate 72b extends to overlap with the lower surface of the bottom member 2b of the seat frame 2 from an upper end of the bent portion 72a. The fixing portion 72 is mounted to the lower surface of the joining portion 71 by a screw 71 a. Holes 73a, 73b are formed at the fixing plate 72b. A diameter of each of the holes 73a, 73b of the fixing plate 72b is equal to a diameter of each of the holes 62a, 63a of the joining member 60.

Holes H1, H2 are formed at the bottom member 2b of the seat frame 2. A diameter of each of the holes H1, H2 is larger than the diameter of each of the holes 62a, 63a of the joining member 60 and the diameter of each of the holes 73a, 73b of the fixing portion 72, respectively. The grommet 76 is attached to the hole H1, and a cylindrical collar 77 is inserted inside the grommet 76. Further, the grommet 78 is attached to the hole H2, and a cylindrical collar 79 is inserted inside the grommet 78. Each of the grommets 76, 78 is made of rubber, for example, and each of the collars 77, 79 is made of metal, for example. Each of the collars 77, 79 may have a flange portion.

The joining member 60 is arranged on the upper side of the bottom member 2b such that a center of each of the holes 62a, 62b of the joining member 60 overlaps with a center of each of the holes H1, H2 of the bottom member 2b. Further, the joining member 70 is arranged on the lower side of the bottom member 2b such that a center of each of the holes 73a, 73b of the fixing portion 72 overlaps with a center of each of the holes H1, H2 of the bottom member 2b.

In this state, a common bolt B1 is inserted into the hole 62a of the joining member 60, the hole H1 of the bottom member 2b and the hole 73a of the fixing portion 72, and a nut N1 is attached to one end of the bolt B1. Thus, the coupling portion 62 of the joining member 60 and the fixing plate 72b of the joining member 70 are fastened to the bottom member 2b. The grommet 76 and the collar 77 are positioned between the inner peripheral surface of the hole H1 and the outer peripheral surface of the bolt B1. Further, a common bolt B2 is inserted into the hole 63a of the joining member 60, the hole H2 of the bottom member 2b and the hole 73b of the fixing portion 72, and a nut N2 is attached to one end of the bolt B2. Thus, the protruding piece 63 of the joining member 60 and the fixing plate 72b of the joining member 70 are fastened to the bottom member 2b. The grommet 78 and the collar 79 are positioned between the inner peripheral surface of the hole H2 and the outer peripheral surface of the bolt B2. In the present example, head portions B1a, B2a of the bolts B1, B2 are arranged on the upper sides of the coupling portion 62 of the joining member 60 and the protruding piece 63, and the nuts N1, N2 are arranged on the lower side of the fixing plate 72b of the fixing portion 72. The nuts N1, N2 may be welded to the fixing plate 72b.

### (4) Effects of Embodiments

In the motorcycle 100 according to the present embodiment, the joining members 60, 70 are fixed between the hydraulic unit 50 arranged below the seat 8 and the pivot shaft AP of the swing arm 9 by the bolts B1, B2 and the nuts N1, N2 to sandwich the bottom member 2b of the seat frame 2 therebetween. In this case, because the brake pipes L1, L2 for the front wheel 5 and the brake pipes L3, L4 for the rear wheel 10 are fixed by the common fastening members (the bolts B1, B2 and the nuts N1, N2), respectively, the number of components can be decreased and a space for the arrangement of other components can be ensured as compared to a case in which these are individually fixed. Therefore, flexibility in the arrangement of other components is increased, and the size of the motorcycle 100 can be decreased.

Further, the brake pipe L4 connected to the brake 10a of the rear wheel 10 is arranged to extend from the hydraulic unit 50 towards the pivot shaft AP, and extend along the swing arm 9 in the rearward direction. Thus, the fluctuation of position of the brake pipe L4 due to the swinging of the swing arm 9 is inhibited, and the oil pressure in the brake caliper BC2 is stable. Thus, the braking force exerted on the rear wheel 10 is prevented from being unstable.

Further, because the brake pipes L1 to L4 are arranged to extend in the common direction from one another from the hydraulic unit 50, the joining members 60, 70 are fixed by the common fastening members from each other, whereby it is possible to decrease the number of components for fixing the brake pipes L1 to L4 and ensure a space for the arrangement of other components without changing the arrangement of the brake pipes L1 to L4.

Further, in the present embodiment, the hydraulic unit 50 and the joining members 60, 70 are coupled by the inflexible pipes L1a, L2a, L3a, L4a having relatively small diameters. Thus, a space occupied by the brake pipes L1 to L4 among the hydraulic unit 50 and the joining members 60, 70 is decreased. Therefore, flexibility in the arrangement of the brake pipes L1 to L4 is improved. Therefore, even when the arrangement of the brake pipes L1 to L4 has a restriction due to other components and the like, the joining members 60, 70 can be fixed between the hydraulic unit 50 and the pivot shaft AP.

Further, the joining members 60, 70 and the brake calipers BC1, BC2 are coupled by the flexible pipes L1b, L2b, L3b, L4b that are made of resin or rubber and have high flexibility. Thus, a cost can be decreased, and assembly performance is improved.

Further, in the present embodiment, the bottom member 2b is provided to extend in the inward direction from the one frame member 2a of the seat frame 2, and the joining members 60, 70 are fixed to the bottom member 2b. In this case, because the joining members 60, 70 are arranged inside the pair of frame members 2a, the size of the motorcycle 100 can be decreased. Further, because the joining members 60, 70 are not fixed to the frame member 2a, flexibility in choices of the thickness and the material of the frame member 2a is increased.

Further, the joining member 60 is arranged on the upper side of the bottom member 2b, and the joining member 70 is arranged on the lower side of the bottom member 2b. In this case, because the joining member 70 is closer to the pivot shaft AP than the joining member 60, it becomes easier to arrange the flexible pipes L3b, L4b of the brake pipes L3, L4 close to the pivot shaft AP.

Further, in the present embodiment, the joining members 60, 70 are positioned with respect to the bottom member 2b such that the holes 62a, 63a of the joining member 60, the holes 73a, 73b of the joining member 70 and the holes H1, H2 of the bottom member 2b overlap with one another, respectively. In this state, the joining members 60, 70 are fixed to the bottom member 2b by the bolts B1, B2 and the nuts N1, N2. Thus, the joining members 60, 70 can be fixed to the bottom member 2b with a simple configuration. Further, because the common holes H1, H2 of the bottom member 2b are used for fixing the joining members 60, 70, the number of holes formed at the bottom member 2b can be decreased. Thus, the strength of the bottom member 2b can be ensured.

Further, the joining member 60 for joining the inflexible pipes L1 a, L2a and the flexible pipes L1b, L2b, and the joining member 70 for joining the inflexible pipes L3a, L4a and the flexible pipe L3b, L4b are fixed to the seat frame 2, respectively. Thus, it is not necessary to separately use other components for fixing the brake pipes L1 to L4, so that the number of components can be decreased.

Further, in the present embodiment, the joining members 60, 70 are fixed to the seat frame 2, respectively, in a region surrounded by the fuel tank 7, the suspension 9a, the swing arm 9 and the one frame member 2a of the seat frame 2. In this case, because the joining members 60, 70 can be fixed to the seat frame 2 in a limited space, flexibility in arrangement and design of the fuel tank 7, the suspension 9a, the swing arm 9 and the seat frame 2 is increased.

### (5) Other Embodiments

### (5-1)

In the above-mentioned embodiment, the joining member 60 that joins the inflexible pipes L1a, L2a and the flexible pipes L1b, L2b of the brake pipes L1, L2, and the joining member 70 that joins the inflexible pipes L3a, L4a and the flexible pipes L3b, L4b of the brake pipes L3, L4, are fixed to the seat frame 2 by the common fastening members, however, the present invention is not limited to this.

A holder other than the joining member 60 may be provided at the brake pipes L1, L2, and a holder other than the joining member 70 may be provided at the brake pipes L3, L4. For example, a holder may be provided at predetermined positions of the flexible pipes L1b, L2b, and a holder may be provided at predetermined positions of the flexible pipes L3b, L4b. In this case, these holders are fixed to the seat frame 2 by common fastening members.

Further, the inflexible pipes L1a, L2a and the flexible pipes L1b, L2b may be joined by joining members different from each other, and the inflexible pipes L3a, L4a and the flexible pipes L3b, L4b may be joined by joining members different from each other. In this case, the joining member that joins the inflexible pipe L1a and the flexible pipe L1b, and the joining member that joins the inflexible pipe L3a and the flexible pipe L3b, may be fixed to the seat frame 2 by common fastening members, and the joining member that joins the inflexible pipe L2a and the flexible pipe L2b and the joining member that joins the inflexible pipe L4a and the flexible pipe L4b may be fixed to the seat frame 2 by other common fastening members. Alternatively, these two pairs of joining members may be fixed to the seat frame 2 by common fastening members.

### (5-2)

In the above-mentioned embodiment, the brake pipes L1, L2 include the inflexible pipes L1a, L2a and the flexible pipes L1b, L2b, respectively, and the brake pipes L3, L4 include the inflexible pipes L3a, L4a and the flexible pipes L3b, L4b, respectively, however, the present invention is not limited to this. Each of the brake pipes L1 to L4 may be formed of the same material (resin or rubber, for example).

### (5-3)

In the above-mentioned embodiment, the master cylinders 22, 24 are connected to the hydraulic unit 50 through the brake pipes L1, L3, and the brake calipers BC1, BC2 are connected to the hydraulic unit 50 through the brake pipes L2, L4, however, the present invention is not limited to this. The master cylinders 22, 24 may be connected to the brake calipers BC1, BC2 through the brake pipes, respectively.

### (5-4)

While the joining members 60, 70 are respectively fixed to the bottom member 2b of the seat frame 2 in the above-mentioned embodiment, the present invention is not limited to this. If it is possible to ensure a space for the arrangement of other components, the joining members 60, 70 may be fixed to the frame members 2a of the seat frame 2 or other portions of the seat frame 2.

Further, the joining member 60 is arranged on the upper surface of the bottom member 2b, and the joining member 70 is arranged on the lower surface of the bottom member 2b in the above-mentioned embodiment, however, the present invention is not limited to this. If it is possible to ensure a space for the arrangement of the brake pipes L1, L2, the joining member 60 may be arranged on the lower surface of the bottom member 2b, and the joining member 70 may be arranged on the upper surface of the bottom member 2b.

### (5-5)

While the above-mentioned embodiment is an example in which the present invention is applied to the motorcycle, the invention is not limited to this. The present invention may be applied to another saddle-straddling type motor vehicle such as a motor tricycle, an ATV (All Terrain Vehicle) or the like.

### (6) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the motorcycle 100 is an example of a saddle-straddling type motor vehicle, the head pipe 1 a is an example of a head pipe, the front wheel 5 is an example of a front wheel, the main frame 1 is an example of a main frame, the frame member 2a is an example of a seat frame, the swing arm 9 is an example of a swing arm, the rear wheel 10 is an example of a rear wheel, the brake 5a is an example of a front wheel brake device, the brake 10a is an example of a rear wheel brake device, the seat 8 is an example of a seat, the hydraulic unit 50 is an example of a hydraulic unit, the brake pipe L2 is an example of a front wheel brake pipe, the brake pipe L4 is an example of a rear wheel brake pipe, the inflexible pipe L2a is an example of a first small diameter pipe, the flexible pipe L2b is an example of a first large diameter pipe, the inflexible pipe L4a is an example of a second small diameter pipe and the flexible pipe L4b is an example of a second large diameter pipe. The joining member 60 is an example of a first holder, the joining member 70 is an example of a second holder and the bolts B1, B2 and the nuts N1, N2 are examples of a fastening member.

Further, the bottom member 2b is an example of a bottom, the holes 62a, 63a are examples of a first hole, the holes 73a, 73b are examples of a second hole, the holes H1, F2 are examples of a third hole, the bolts B1, B2 are examples of a bolt and the nuts N1, N2 are examples of a nut.

Further, the fuel tank 7 is an example of a fuel tank, the suspension 9a is an example of a suspension member and the air cleaner AC is an example of an air cleaner.

As each of constituent elements recited in the claims, various other elements having configurations or functions described in the claims can be also used.

### INDUSTRIAL APPLICABILITY

The present invention can be effectively utilized for various saddle-straddling type motor vehicles.

## Claims

1. A saddle-straddling type motor vehicle comprising:
a head pipe (1a);
a front wheel (5) arranged below the head pipe (1 a);
a main frame (1) that extends in a vehicle rearward downward direction from the head pipe (1 a);
a pair of right and left seat frames (2a) that extends in a vehicle rearward direction from the main frame (1);
a swing arm (9) arranged below the pair of seat frames (2a) and mounted to the main frame (1) to be swingable with a pivot shaft (AP) being used as a center;
a rear wheel (10) rotatably mounted to the swing arm (9);
a front wheel brake device (5a) for braking the front wheel (5);
a rear wheel brake device (10a) for braking the rear wheel (10);
a seat (8) supported by the pair of seat frames (2a);
a hydraulic unit (50), for driving the front wheel brake device (5a) and the rear wheel brake device (10a), that is provided below the seat (8) and above the swing arm (9);
a front wheel brake pipe (L2) for connecting the front wheel brake device (5a) to the hydraulic unit (50); and
a rear wheel brake pipe (L4) for connecting the rear wheel brake device (10a) to the hydraulic unit (50), wherein
at least a part of the hydraulic unit (50) is positioned between the pair of seat frames (2a),
the pivot shaft (AP) is positioned at a position obliquely further forward downward than the hydraulic unit (50),
the front wheel brake pipe (L2) includes
a first large diameter pipe (L2b),
a first small diameter pipe (L2a) that communicates with the first large diameter pipe (L2b), and has a diameter smaller than the first large diameter pipe (L2b), and
a first holder (60),
at least the hydraulic unit (50) and the first holder (60) are coupled by the first small diameter pipe (L2a),
the rear wheel brake pipe (L4) includes
a second large diameter pipe (L4b),
a second small diameter pipe (L4a) that communicates with the second large diameter pipe (L4b), and has a diameter smaller than the second large diameter pipe (L4b), and
a second holder (70),
at least the hydraulic unit (50) and the second holder (70) are coupled by the second small diameter pipe (L4a), and
the first and second holders (60, 70) are fixed to one seat frame (2) by a common fastening member between the hydraulic unit (50) and the pivot shaft (AP) when seen in side view to sandwich a part of the one seat frame (2) therebetween.

2. The saddle-straddling type motor vehicle according to claim 1, wherein
the first and second large diameter pipes (L2b, L4b) are made of resin or rubber, respectively, and
the first and second small diameter pipes (L2a, L4a) are made of metal, respectively.

3. The saddle-straddling type motor vehicle according to claim 1 or 2, wherein
the first holder (60) and the front wheel brake device (5a) are coupled by the first large diameter pipe (L2b), and the second holder (70) and the rear wheel brake device (10a) are coupled by the second large diameter pipe (L4b).

4. The saddle-straddling type motor vehicle according to any one of claims 1 to 3, wherein
the part of the one seat frame (2) includes a bottom (2b) that extends in an inward direction from the one seat frame (2).

5. The saddle-straddling type motor vehicle according to claim 4, wherein
the first holder (60) is arranged on an upper side of the bottom (2b), and the second holder (70) is arranged on a lower side of the bottom (2b).

6. The saddle-straddling type motor vehicle according to any one of claims 1 to 5, wherein
a first hole (62a, 63a) is provided at the first holder (60), a second hole (73a, 73b) is provided at the second holder (70) and a third hole (H1, H2) is provided at the part of the one seat frame (2),
the fastening member includes a bolt (B1, B2) and a nut (N1, N2), and
the first and second holders (60, 70) are positioned with respect to the one seat frame (2) such that the first hole (62a, 63a), the second hole (73a, 73b) and the third hole (H1, H2) overlap with one another, and the bolt (B1, B2) is inserted into the first hole (62a, 63a), the second hole (73a, 73b) and the third hole (H1, H2), and the nut (N1, N2) is attached to one end of the bolt (B1, B2).

7. The saddle-straddling type motor vehicle according to any one of claims 1 to 6, wherein
the first holder (60) includes a first joining member for joining the first small diameter pipe (L2a) and the first large diameter pipe (L2b), and
the second holder (70) includes a second joining member for joining the second small diameter pipe (L4a) and the second large diameter pipe (L4b).

8. The saddle-straddling type motor vehicle according to any one of claims 1 to 7, further comprising:
a fuel tank (7) provided in front of the seat (8); and
a suspension member (9a) arranged between the fuel tank (7) and the swing arm (9), wherein
the first and second holders (60, 70) are fixed in a region surrounded by the fuel tank (7), the swing arm (9), the suspension member (9a) and the one seat frame (2), respectively.

9. The saddle-straddling type motor vehicle according to claim 8, further comprising an air cleaner (AC) that is provided between the head pipe (1 a) and the fuel tank (7) and purifies air led to an engine (6).

## Patentansprüche

1. Ein Sattel-Grätsch-Typ-Motorfahrzeug, das folgende Merkmale aufweist:
ein Kopfrohr (1 a);
ein Vorderrad (5), das unter dem Kopfrohr (1 a) angeordnet ist;
einen Hauptrahmen (1), der sich von dem Kopfrohr (1 a) in einer Fahrzeug-Rückwärts/Abwärts-Richtung erstreckt;
ein Paar von rechten und linken Sitzrahmen (2a), das sich von dem Hauptrahmen (1) in einer Fahrzeugrückwärtsrichtung erstreckt;
einen Schwingarm (9), der unter dem Paar von Sitzrahmen (2a) angeordnet ist und an dem Hauptrahmen (1) befestigt ist, um mit einer Schwenkwelle (AP) schwingbar zu sein, die als eine Mitte verwendet wird;
ein Hinterrad (10), das drehbar an dem Schwingarm (9) befestigt ist;
eine Vorderradbremsvorrichtung (5a) zum Bremsen des Vorderrads (5);
eine Hinterradbremsvorrichtung (10a) zum Bremsen des Hinterrads (10);
einen Sitz (8), der durch das Paar von Sitzrahmen (2a) getragen wird;
eine Hydraulikeinheit (50) zum Antreiben der Vorderradbremsvorrichtung (5a) und der Hinterradbremsvorrichtung (10a), die unter dem Sitz (8) und über dem Schwingarm (9) vorgesehen ist;
ein Vorderradbremsrohr (L2) zum Verbinden der Vorderradbremsvorrichtung (5a) mit der Hydraulikeinheit (50); und
ein Hinterradbremsrohr (L4) zum Verbinden der Hinterradbremsvorrichtung (10a) mit der Hydraulikeinheit (50), wobei
zumindest ein Teil der Hydraulikeinheit (50) zwischen dem Paar von Sitzrahmen (2a) positioniert ist,
die Schwenkwelle (AP) an einer Position schräg weiter vorne unten als die Hydraulikeinheit (50) positioniert ist,
das Vorderradbremsrohr (L2) folgende Merkmale umfasst:
ein erstes Rohr mit großem Durchmesser (L2b), ein erstes Rohr mit kleinem Durchmesser (L2a), das mit dem ersten Rohr mit großem Durchmesser (L2b) kommuniziert und einen Durchmesser aufweist, der kleiner ist als der des ersten Rohrs mit großem Durchmesser (L2b), und
einen ersten Halter (60),
zumindest die Hydraulikeinheit (50) und der erste Halter (60) durch das erste Rohr mit kleinem Durchmesser (L2a) gekoppelt sind,
das Hinterradbremsrohr (L4) folgende Merkmale umfasst:
ein zweites Rohr mit großem Durchmesser (L4b),
ein zweites Rohr mit kleinem Durchmesser (L4a), das mit dem zweiten Rohr mit großem Durchmesser (L4b) kommuniziert und einen kleineren Durchmesser aufweist als das zweite Rohr mit großem Durchmesser (L4b), und
einen zweiten Halter (70),
zumindest die Hydraulikeinheit (50) und der zweite Halter (70) durch das zweite Rohr mit kleinem Durchmesser (L4a) gekoppelt sind, und
der erste und der zweite Halter (60, 70) an einem Sitzrahmen (2) fixiert sind durch ein gemeinsames Halterungsbauglied zwischen der Hydraulikeinheit (50) und der Schwenkwelle (AP) in der Seitenansicht, um einen Teil des einen Sitzrahmens (2) zwischen denselben anzuordnen.

2. Das Sattel-Grätsch-Typ-Motorfahrzeug gemäß Anspruch 1, bei dem
das erste und das zweite Rohr mit großem Durchmesser (L2b, L4b) aus Harz beziehungsweise Gummi hergestellt sind, und
das erste und das zweite Rohr mit kleinem Durchmesser (L2a, L4a) jeweils aus Metall hergestellt sind.

3. Das Sattel-Grätsch-Typ-Motorfahrzeug gemäß Anspruch 1 oder 2, bei dem
der erste Halter (60) und die Vorderradbremsvorrichtung (5a) durch das erste Rohr mit großem Durchmesser (L2b) gekoppelt sind, und der zweite Halter (70) und die Hinterradbremsvorrichtung (10a) durch das zweite Rohr mit großem Durchmesser (L4b) gekoppelt sind.

4. Das Sattel-Grätsch-Typ-Motorfahrzeug gemäß einem der Ansprüche 1 bis 3, bei dem
der Teil des einen Sitzrahmens (2) ein Unterteil (2b) umfasst, das sich von dem einen Sitzrahmen (2) in einer Richtung nach innen erstreckt.

5. Das Sattel-Grätsch-Typ-Motorfahrzeug gemäß Anspruch 4, bei dem
der erste Halter (60) auf einer oberen Seite des Unterteils (2b) angeordnet ist und der zweite Halter (70) auf einer unteren Seite der Unterteils (2b) angeordnet ist.

6. Das Sattel-Grätsch-Typ-Motorfahrzeug gemäß einem der Ansprüche 1 bis 5, bei dem
ein erstes Loch (62a, 63a) an dem ersten Halter (60) vorgesehen ist, ein zweites Loch (73a, 73b) an dem zweiten Halter (70) vorgesehen und ein drittes Loch (H1, H2) an dem Teil des einen Sitzrahmens (2) vorgesehen ist,
das Befestigungsbauglied eine Schraube (B1, B2) und eine Mutter (N1, N2) umfasst, und
der erste und der zweite Halter (60, 70) bezüglich des einen Sitzrahmens (2) positioniert sind, so dass das erste Loch (62a, 63a), das zweite Loch (73a, 73b) und das dritte Loch (H1, H2) miteinander überlappen, und die Schraube (B1, B2) in das erste Loch (62a, 63a), das zweite Loch (73a, 73b) und das dritte Loch (H1, H2) eingefügt wird, und die Mutter (N1, N2) an einem Ende der Schraube (B1, B2) angebracht ist.

7. Das Sattel-Grätsch-Typ-Motorfahrzeug gemäß einem der Ansprüche 1 bis 6, bei dem
der erste Halter (60) ein erstes Verbindungsbauglied umfasst zum Verbinden des ersten Rohrs mit kleinem Durchmesser (L2a) und des ersten Rohrs mit großem Durchmesser (L2b), und
der zweite Halter (70) ein zweites Verbindungsbauglied umfasst zum Verbinden des zweiten Rohrs mit kleinem Durchmesser (L4a) und des zweiten Rohrs mit großem Durchmesser (L4b).

8. Das Sattel-Grätsch-Typ-Motorfahrzeug gemäß einem der Ansprüche 1 bis 7, das ferner folgende Merkmale aufweist:
einen Kraftstofftank (7), der vor dem Sitz (8) vorgesehen ist; und
ein Aufhängungsbauglied (9a), das zwischen dem Kraftstofftank (7) und dem Schwingarm (9) angeordnet ist, wobei
der erste und der zweite Halter (60, 70) in einer Region fixiert sind, die durch den Kraftstofftank (7), den Schwingarm (9), das Aufhängungsbauglied (9a) beziehungsweise den einen Sitzrahmen (2) umgeben ist.

9. Das Sattel-Grätsch-Typ-Motorfahrzeug gemäß Anspruch 8, das ferner ein Luftfilter (AC) aufweist, das zwischen dem Kopfrohr (1 a) und dem Kraftstofftank (7) vorgesehen ist und Luft reinigt, die zu einem Motor (6) geleitet wird.

## Revendications

1. Véhicule à moteur de type à selle à enfourcher, comprenant:
un tube de tête (1a) ;
une roue avant (5) disposée au-dessous du tube de tête (1a);
un châssis principal (1) qui s'étend dans une direction vers l'arrière et vers le bas du véhicule depuis le tube de tête (1a);
une paire de cadres de sièges droit et gauche (2a) qui s'étendent dans une direction vers l'arrière du véhicule depuis le châssis principal (1);
un bras oscillant (9) disposé au-dessous de la paire de cadres de siège (2a) et monté sur le châssis principal (1) pour pouvoir pivoter, un arbre de pivotement (AP) étant utilisé comme centre;
une roue arrière (10) montée de manière rotative sur le bras oscillant (9);
un dispositif de frein de roue avant (5a) destiné à freiner la roue avant (5);
un dispositif de frein de roue arrière (10a) destiné à freiner la roue arrière (10);
un siège (8) supporté par la paire de cadres de siège (2a);
une unité hydraulique (50), destinée à entraîner le dispositif de frein de roue avant (5a) et le dispositif de frein de roue arrière (10a), qui est prévue au-dessous du siège (8) et au-dessus du bras oscillant (9);
un tube de frein de roue avant (L2) destiné à connecter le dispositif de frein de roue avant (5a) de l'unité hydraulique (50); et
un tube de frein de roue arrière (L4) destiné à connecter le dispositif de frein de roue arrière (10a) à l'unité hydraulique (50),
dans lequel
au moins une partie de l'unité hydraulique (50) est positionnée entre la paire de cadres de siège (2a),
l'arbre de pivotement (AP) est positionné en une position obliquement plus en avant et vers le bas que l'unité hydraulique (50),
le tube de frein de roue avant (L2) comporte
un premier tube de grand diamètre (L2b),
un premier tube de petit diamètre (L2a) qui communique avec le premier tube de grand diamètre (L2b), et présente un diamètre plus petit que le premier tube de grand diamètre (L2b), et
un premier support (60),
au moins l'unité hydraulique (50) et le premier support (60) sont couplés par le premier tube de petit diamètre (L2a),
le tube de frein de roue arrière (L4) comporte
un deuxième tube de grand diamètre (L4b),
un deuxième tube de petit diamètre (L4a) qui communique avec le deuxième tube de grand diamètre (L4b), et présente un diamètre plus petit que le deuxième tube de grand diamètre (L4b), et
un deuxième support (70),
au moins l'unité hydraulique (50) et le deuxième support (70) sont couplés par le deuxième tube de petit diamètre (L4a) et
les premier et deuxième supports (60, 70) sont fixés à un cadre de siège (2) par un élément de fixation commun entre l'unité hydraulique (50) et l'arbre de pivotement (AP), lorsque vu en vue de côté, pour prendre en sandwich une partie de l'un cadre de siège (2) entre eux.

2. Véhicule à moteur de type à selle à enfourcher selon la revendication 1, dans lequel
les premier et deuxième tubes de grand diamètre (L2b, L4b) sont réalisés respectivement en résine ou en caoutchouc, et
les premier et deuxième tubes de petit diamètre (L2a, L4a) sont réalisés respectivement en métal.

3. Véhicule à moteur de type à selle à enfourcher selon la revendication 1. ou 2, dans lequel
le premier support (60) et le dispositif de frein de roue avant (5a) sont couplés par le premier tube de grand diamètre (L2b) et le deuxième support (70) et le dispositif de frein de roue arrière (10a) sont couplés par le deuxième tube de grand diamètre (L4b).

4. Véhicule à moteur de type à selle à enfourcher selon l'une quelconque des revendications 1 à 3, dans lequel
la partie de l'un cadre de siège (2) comporte un fond (2b) qui s'étend dans une direction vers l'intérieur à partir de l'un cadre de siège (2).

5. Véhicule à moteur de type à selle à enfourcher selon la revendication 4, dans lequel
le premier support (60) est disposé sur une face supérieure du fond (2b), et le deuxième support (70) est disposé sur une face inférieure du fond (2b).

6. Véhicule à moteur de type à selle à enfourcher selon l'une quelconque des revendications 1 à 5, dans lequel
un premier trou (62a, 63a) est prévu dans le premier support (60), un deuxième trou (73a, 73b) est prévu dans le deuxième support (70) et un troisième trou (H1, H2) est prévu dans la partie de l'un cadre de siège (2),
l'élément de fixation comporte un boulon (B1, B2) et un écrou (N1, N2), et
les premier et deuxième supports (60, 70) sont positionnés par rapport à l'un cadre de siège (2) de sorte que le premier trou (62a, 63a), le deuxième trou (73a, 73b) et le troisième trou (H1, H2) viennent en recouvrement l'un avec l'autre, et le boulon (B1, B2) est introduit dans le premier trou (62a, 63a), le deuxième trou (73a, 73b) et le troisième trou (H1, H2) et l'écrou (N1, N2) est fixé à une extrémité du boulon (B1, B2).

7. Véhicule à moteur de type à selle à enfourcher selon l'une quelconque des revendications 1 à 6, dans lequel
le premier support (60) comporte un premier élément d'assemblage destiné à assembler le premier tube de petit diamètre (L2a) et le premier tube de grand diamètre (L2b), et
le deuxième support (70) comporte un deuxième élément d'assemblage destiné à assembler le deuxième tube de petit diamètre (L4a) et le deuxième tube de grand diamètre (L4b).

8. Véhicule à moteur de type à selle à enfourcher selon l'une quelconque des revendications 1 à 7, comprenant par ailleurs:
un réservoir de carburant (7) prévu en avant du siège (8); et
un élément de suspension (9a) disposé entre le réservoir de carburant (7) et le bras oscillant (9),
dans lequel
les premier et deuxième supports (60, 70) sont fixés dans une région entourée par respectivement le réservoir de carburant (7), le bras oscillant (9), l'élément de suspension (9a) et l'un cadre de siège (2).

9. Véhicule à moteur de type à selle à enfourcher selon la revendication 8, comprenant par ailleurs un filtre à air (AC) qui est prévu entre le tube de tête (1a) et le réservoir de carburant (7) et purifie l'air amené à un moteur (6).
